# EUROPEAN PATENT APPLICATION

(11) **EP 2 704 529 A1**
(43) Date of publication of application: **05.03.2014**
(21) Application number: 13181026.9
(22) Date of filing: 20.08.2013
(51) Int. Cl.: H05B 33/08, H05B 37/02

(54) **Illumination control system**

(30) Priority: 28.08.2012 JP 2012187998
(71) Applicant: Panasonic Corporation, Kadoma-shi, Osaka 571-8501 (JP)
(72) Inventor: Nagazoe, Kazufumi, Osaka, Osaka 540-6207 (JP); Miyake, Yoshiyuki, Osaka, Osaka 540-6207 (JP)
(74) Representative: Müller-Boré & Partner Patentanwälte PartG mbB

(57) **Abstract**

An illumination control system includes a controller configured to set a lighting condition including a color temperature and a dimming level of a light outputted from an illumination apparatus. The controller includes: a wireless communication unit for outputting a control signal including the lighting condition, a touch panel provided on a display to sense a position touched thereon, and an image capture unit for capturing an image of the illumination apparatus, wherein when the image of the illumination apparatus is displayed on the display and the touch panel is touched to produce a touch pattern, the wireless communication unit outputs the control signal including the lighting condition set based on the touch pattern.

## Description

### Field of the Invention

The present invention relates to an illumination control system for controlling a color temperature and a dimming level of light emitted from an illumination apparatus.

### Background of the Invention

A conventional illumination apparatus, which employs, e.g., a fluorescent lamp as a light source, can emit light capable of varying its color temperature, e.g., cool-white light, daylight white light or warm-white light. In such an illumination apparatus, however, the color temperature change of the illumination light can only be achieved by replacing the fluorescent lamp itself. Thus, in a general illumination control system, a setting parameter of a controller has been mainly a dimming level (brightness). In recent years, however, a color temperature variable illumination apparatus using multiple kinds of LEDs (light emitting diodes), organic EL (electroluminescent) devices or the like, which emit lights of different colors, as light sources is widely used. This makes it possible to adjust the color temperature of the illumination light as a setting parameter.

For example, Japanese Patent Application Publication No. 2011-35422 discloses a user interface in which a chromaticity diagram is displayed on a touch panel and a user operates the touch panel to thereby independently adjust output levels (i.e., luminances) of light sources including multiple LEDs which emit different colored lights.

However, it is not easy for a general user having no expertise in illumination optics or the like to set a color temperature or the like by using the chromaticity diagram as in the user interface described in the Japanese Publication supra.

### Summary of the Invention

In view of the above, the present invention provides an illumination control system in which even a user without having expertise can readily and intuitively set a color temperature and a dimming level of illumination light.

In accordance with an aspect of the present invention, there is provided an illumination control system including: an illumination apparatus to which identification information is attached; and a controller configured to set a lighting condition including a color temperature and a dimming level of a light outputted from the illumination apparatus, wherein the controller includes: a wireless communication unit configured to output a control signal including the lighting condition; a memory configured to store the identification information of the illumination apparatus in association with an image of the illumination apparatus; a display configured to display the image of the illumination apparatus; a touch panel disposed on the display and configured to sense a position touched on the touch panel; and an image capture unit configured to capture the image of the illumination apparatus, and wherein when the image of the illumination apparatus is displayed on the display and the touch panel is touched to produce a touch pattern, the lighting condition is set based on the touch pattern and the wireless communication unit outputs the control signal including the lighting condition.

The controller may set the dimming level to increase or decrease when one point touched on the touch panel draws a circle, and set the color temperature to increase or decrease when two points touched on the touch panel move toward each other or away from each other.

The illumination control system may further include a dimming device configured to output a dimming signal for controlling the illumination apparatus, wherein the dimming device may receive wirelessly the control signal outputted from the wireless communication unit of the controller and output the dimming signal in accordance with the received control signal.

Further, the illumination apparatus may include a modulation unit which modulates a light from a light source to thereby output an illumination light on which the identification information is superimposed, and wherein when the image capture unit receives the illumination light, the controller may read the identification information superimposed on the illumination light.

Furthermore, the dimming device may be included in the illumination apparatus.

In addition, the illumination apparatus may include an address setting unit for setting an identification address as the identification information. Alternatively, the identification information may be stored in the memory by using the touch panel.

### Brief Description of the Drawings

The objects and features of the present invention will become apparent from the following description of embodiments, given in conjunction with the accompanying drawings, in which:
FIG. 1 is a schematic block diagram of an illumination control system in accordance with an embodiment of the present invention;
FIG. 2 illustrates a block diagram showing detailed configurations of respective parts of the illumination control system;
FIG. 3 shows a perspective view for explaining a registration process of an illumination apparatus by using a controller of the illumination control system;
FIG. 4 depicts a diagram showing a registration screen displayed on the controller for use in registering the illumination apparatus;
FIG. 5 represents a view showing a selection screen displayed on the controller for use in selecting the illumination apparatus;
FIGS. 6A and 6B present diagrams showing setting operation screens displayed on the controller for use in setting respective lighting conditions for the illumination apparatus;
FIG. 7 provides a schematic block diagram of an illumination control system in accordance with a modification of the embodiment;
FIG. 8 offers a block diagram showing detailed configurations of respective parts of the illumination control system provided in FIG. 7;
FIG. 9 represents a schematic block diagram of an illumination control system in accordance with another modification of the embodiment; and
FIG. 10 illustrates a block diagram showing detailed configurations of respective parts of the illumination control system represented in FIG. 9.

### Detailed Description of the Embodiments

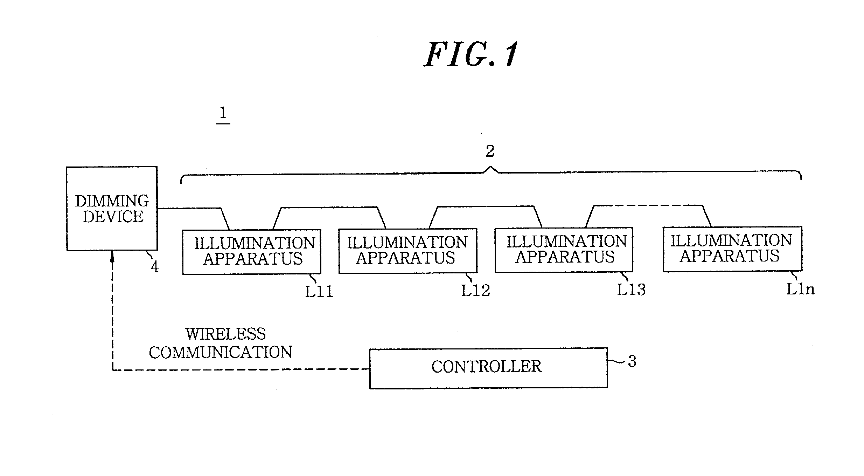

An illumination control system in accordance with an embodiment of the present invention will now be described with reference to FIGS. 1 to 6.

As shown in FIG. 1, an illumination control system 1 of the present embodiment includes a plurality of illumination apparatuses L11 to L1n (hereinafter collectively referred to as illumination apparatuses 2) installed in a predetermined space, and a controller 3 for setting a lighting condition such as a color temperature and a luminance (i.e., dimming level) of an illumination light emitted from each of the illumination apparatuses 2. Further, the illumination control system 1 includes a dimming device 4 which outputs a dimming signal for controlling lighting of each illumination apparatuses 2 in accordance with the lighting condition set by the controller 3. The illumination control system 1 may be suitably employed in, e.g., a general house, a store or the like.

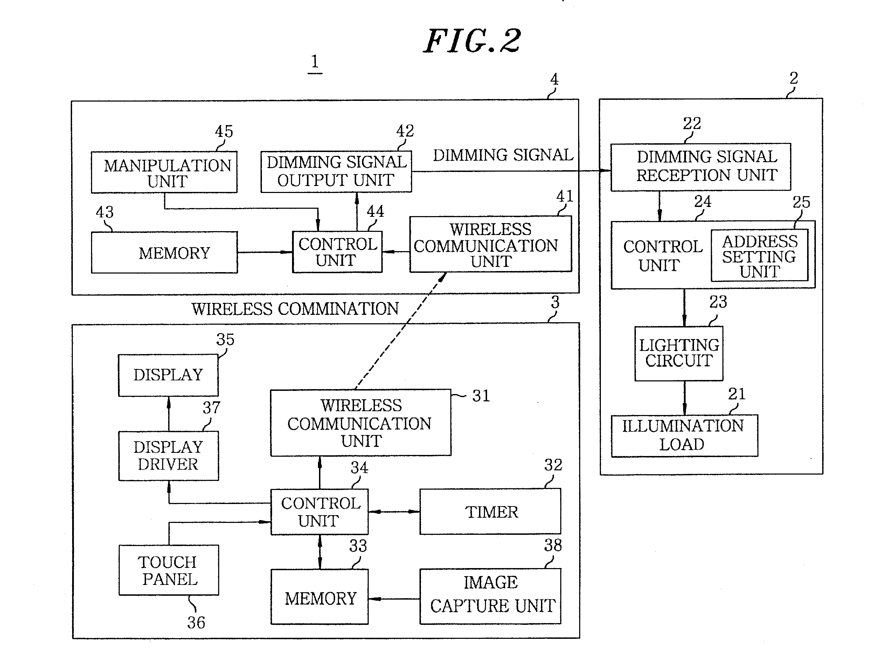

As shown in FIG. 2, the controller 3 includes a wireless communication unit 31 which outputs a control signal to the dimming device 4 by wireless communication, a timer 32 for counting the time, a memory 33 for storing images (still images) and the like of the illumination apparatuses 2 as to be described later, and a control unit 34 for operating the wireless communication unit 31 and the like. The control signal includes identification information and the lighting condition (specifically, setting information thereof) of an illumination apparatus 2 to be controlled currently.

Further, the controller 3 includes a display 35 for displaying a still image and the like of an illumination apparatus 2, a touch panel 36 provided on the display 5 to allow, e.g., a user to specify a still image to be displayed on the display 35, and a display driver 37 which drives the display 35 under the control of the control unit 34. The controller 3 still further includes an image capture unit 38 for acquiring the images of the illumination apparatuses 2, e.g., by capturing a still image of each of the illumination apparatuses 2.

The controller 3 is a mobile terminal that can be carried with ease in an indoor area. The controller 3 transmits the control signal through wireless communication to the dimming device 4 which is wired with the illumination apparatuses 2. A multifunctional portable terminal such as a tablet or a smart phone installed with dedicated software may be preferably used as the controller 3, but a dedicated terminal for the illumination control system 1 may be used instead. The controller 3 includes a battery of a predetermined capacity and a control power supply unit (both not shown) obtaining a required power from an external power source.

Under the control of the control unit 34, the wireless communication unit 31 outputs to the dimming device 4 a control signal produced in accordance with the lighting condition of the illumination apparatus 2 set as will be described later. NFC (near field communication / FeliCa (contactless RFID smart card system from SONY), IrDA (infrared data association (IrDA), WiFi (wireless LAN (local area network)) or the like may be used in wireless communication. A general clock element may be used as the timer 32 to clock the current time so as to perform the 24 hour schedule control. A general-purpose microcomputer having a memory and a microprocessor as its CPU (central processing unit) may be used as the control unit 34. A nonvolatile memory such as EEPROM (electrically erasable programmable read-only memory) or a built-in memory of the microcomputer (e.g., one-chip microcomputer) which is used as the control unit 34 may be used as the memory 33.

The memory 33 stores the still images of the illumination apparatuses 2 captured as will be described later, in association with identification information assigned to the illumination apparatuses 2. As for the display 35, an organic EL display or a liquid crystal display monitor having, e.g., an LED (light emitting diode) backlight may be used. The display driver 37 converts the still images stored in the memory 33 into icons and displays the icons on the display 35. The touch panel 36 detects the position of a user's fingertip touching thereon by using a resistive film method or electrostatic method or the like.

The dimming device 4 includes a wireless communication unit 41 which performs wireless communication with the wireless communication unit 31 of the controller 3, a dimming signal output unit 42 which outputs dimming signals to the illumination apparatuses 2, a memory 43 which stores identification information of the illumination apparatuses 2 and the like, and a control unit 44 which operates the dimming signal output unit 42 and the like. The dimming signal output unit 42 outputs the dimming signals in accordance with lighting conditions included in control signals received from the wireless communication unit 31 under the control of the control unit 44.

As for a dimming signal, a digital dimming signal (DALI (digital addressable lighting interface), DMX (digital multiplexer), etc.), PWM signal or the like may be used. Further, the dimming device 4 includes a manipulation unit 45 which allows controlling the lighting without recourse to the controller 3. The manipulation unit 45 may be configured same as the touch panel 36 of the controller 3, or may be a fader, a volume switch or the like. Also, the manipulation unit 45 may be constituted integrally with or separately from the dimming device 4. The wireless communication unit 41, the memory 43, and the control unit 44 may be constituted as in their corresponding parts of the controller 3.

Each of the illumination apparatuses 2 includes an illumination load 21, a dimming signal reception unit 22 which receives a dimming signal from the dimming signal output unit 42 of the dimming device 4, a lighting circuit 23 which supplies a power required to turn on the illumination load 21, and a control unit 24 which drives the lighting circuit 23. The illumination apparatus 2 further includes a power supply unit (not shown) for converting and transforming a commercial power to a predetermined current that can be used in the lighting circuit 23. The illumination load 21 is configured to combine multiple kinds of LEDs or organic EL devices emitting different colored lights such that the color temperature of the illumination is variable.

The lighting circuit 23 includes a switching circuit, a transformer circuit and the like to supply a predetermined current to each LED or EL device of the illumination load 21 in response to an instruction from the control unit 24. The control unit 24 includes a general-purpose microcomputer for illumination control, a memory and the like to store therein identification information (ID address) of the corresponding illumination apparatus 2, and has an address setting unit 25 which allows setting the identification information in the illumination control system 1. The address setting unit 25 includes an operation unit or connector such that a unique ID address of the illumination apparatus 2 can be inputted directly or via a dedicated line from the outside.

Next, a registration operation of the illumination apparatus 2 performed by using the controller 3 will be described. First, the user assigns a unique identification information (ID address) to each illumination apparatus 2 in the indoor area without duplication. This assignment may be performed during installation of the illumination apparatuses 2. Then, the user activates from a main screen (not shown) of the controller 3 a registration screen of an illumination apparatus 2 to be registered.

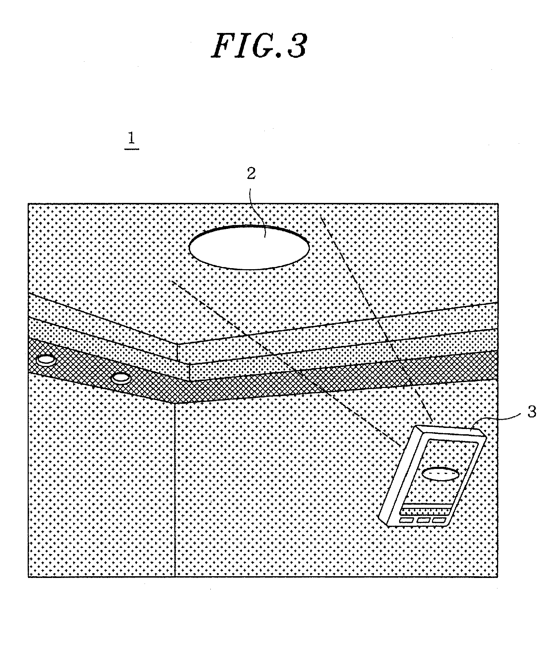

Thereafter, all the illumination apparatuses 2 in the system are turned off, e.g., by user and then by manipulating the manipulation unit 45 of the dimming device 4, only an illumination apparatus 2 having a predetermined identification address is turned on. Then, as shown in FIG. 3, the user captures the still image of the turned-on illumination apparatus 2, by driving the image capture unit 38 of the controller 3.

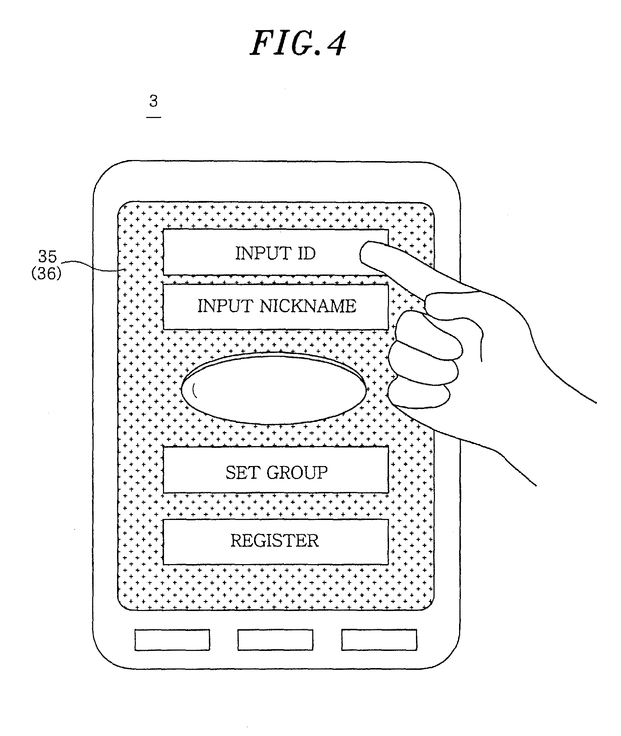

Subsequently, the user inputs the ID address of the illumination apparatus 2 whose image has been captured, by a finger touch operation on a soft keyboard (not shown), which is popped up on the touch panel 36, or the like in the registration screen as shown in FIG. 4. At this time, in addition to the ID address, it is possible to set the nickname and a group of the illumination apparatus 2 illustrated by the still image to be registered. In this way, the still image, the ID address and the nickname of one illumination apparatus 2 are associated with one another, and the data thereof is recorded in the memory 33 on a group basis. The above-described registration operation is performed for all illumination apparatuses 2 included in the illumination control system 1.

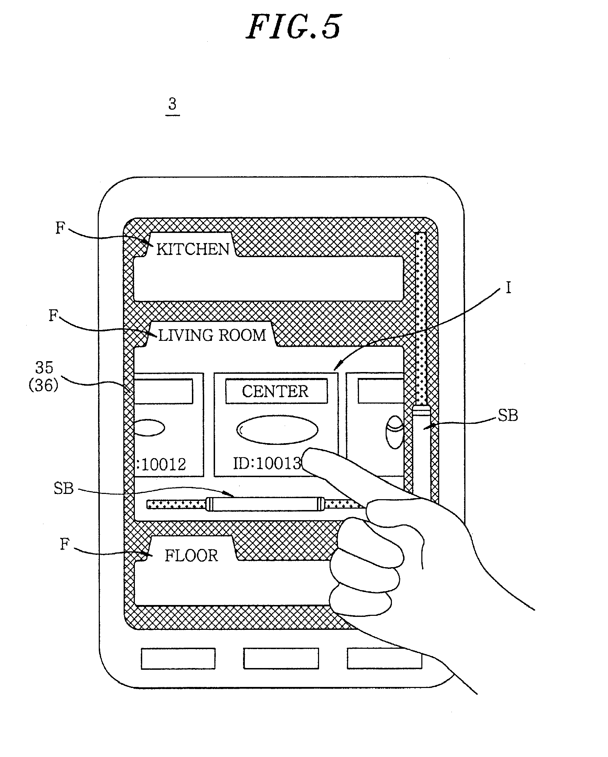

Next, a lighting condition setting operation will be described with reference to FIGS. 5 to 6B. When the user starts setting a lighting condition for a target illumination apparatus 2 to be set, the data of the available illumination apparatuses 2 controller 3 is read first from the memory 33 by using a selection screen as shown in FIG. 5. The data of the illumination apparatuses 2 is stored in one or more folders F generated on a group-by group basis in the memory 33, and a still image of each illumination apparatus 2 is displayed as an icon in a corresponding folder F.

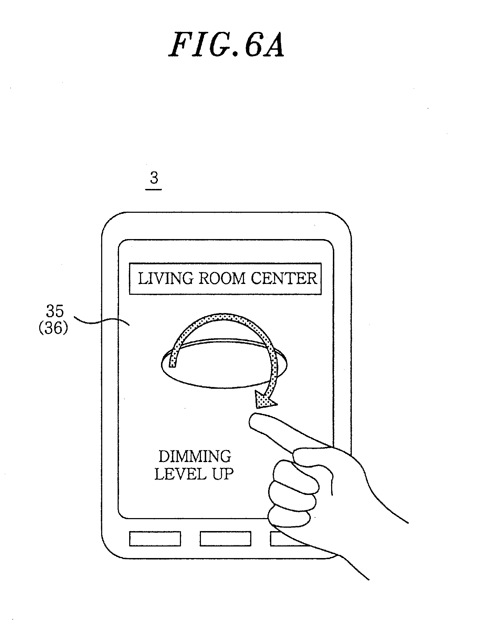

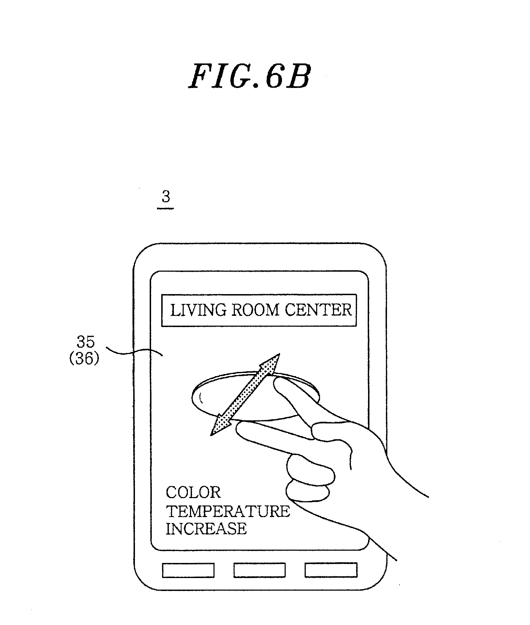

If there are a number of folders F, a scroll bar SB is displayed on the selection screen. The same applies when a plurality of illumination apparatuses 2 are registered in one folder F. The user performs a touch operation on the touch panel 36 on which the selection screen of the illumination apparatuses 2 is displayed as shown in FIG. 5, thereby selecting an illumination apparatus 2 to be set. For example, the user selects a folder F while scrolling, and touches an icon I of the target illumination apparatus 2 to be set in the selected folder F to thereby select the illumination apparatus 2 to be set. Then, the touched still image of the illumination apparatus 2 is enlarged, and the display 35 is switched to a setting input screen as shown in FIGS. 6A and 6B.

When the user touches the touch panel 36 provided on the still image of the selected illumination apparatus 2 in the setting input screen, the wireless communication unit 31 of the controller 3 outputs a control signal including a lighting condition of the selected illumination apparatus 2 based on a pattern of the touch operation. The touch pattern may be a pattern where one point touched on the touch panel 36 draws approximately a circle as shown in FIG. 6A, or a pattern where two points touched on the touch panel 36 move toward each other or away from each other, as shown in FIG. 6B.

For example, in the case where a touch pattern of drawing a circle is performed on the touch panel 36 as shown in FIG. 6A, when a clockwise circle is drawn, the wireless communication unit 31 outputs, e.g., a control signal for increasing the dimming level of the illumination apparatus 2. On the other hand, when a counterclockwise circle is drawn, the wireless communication unit 31 outputs, e.g., a control signal for decreasing the dimming level of the illumination apparatus 2.

Further, in the case where a touch pattern of moving two points is performed on the touch panel 36 as shown in FIG. 6B, when the two points move away from each other, the wireless communication unit 31 outputs, e.g., a control signal for increasing a color temperature of the light illuminated from the illumination apparatus 2. On the contrary, when the two points move toward each other, the wireless communication unit 31 outputs, e.g., a control signal for decreasing the color temperature of the light illuminated from the illumination apparatus 2.

The dimming device 4 receives wirelessly the control signal outputted from the controller 3 and, in accordance with the control signal, outputs a dimming signal for controlling the illumination apparatus 2 corresponding to the still image. In the illumination apparatus 2, when the dimming signal reception unit 22 receives the dimming signal, the control unit 24 drives the lighting circuit 23 based on the dimming signal to thereby turn on the illumination load 21.

With this configuration, the user can set the lighting condition such as a dimming level and a color temperature of the light outputted from the illumination apparatus 2 by performing a multi-touch operation on the still image of the illumination apparatus 2 displayed on the display 35. Thus, even a general user having no expertise can intuitively set the color temperature and the dimming level of the illumination light with ease.

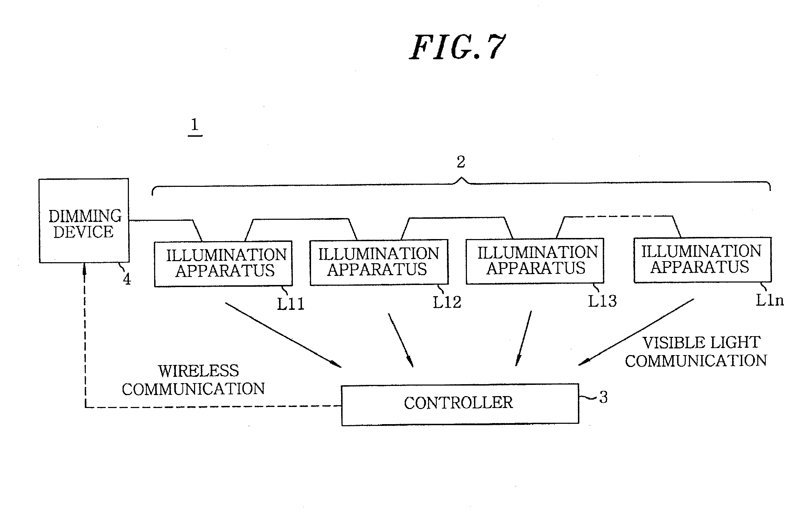

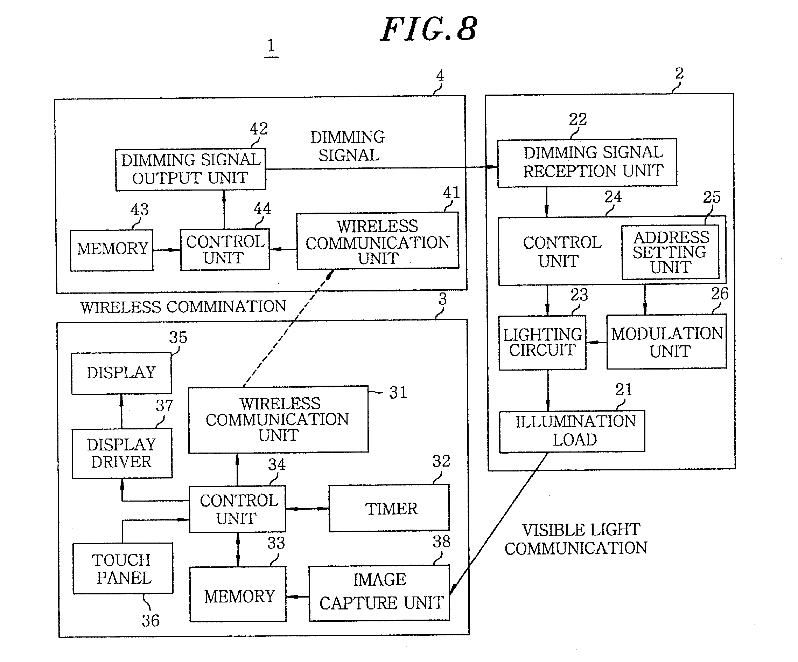

Next, an illumination control system 1 in accordance with a modification of the above-described embodiment will be described with reference to FIGS. 7 and 8. In the illumination control system 1 in accordance with the present modification, the illumination apparatus 2 further includes a modulation unit 26 which modulates an illumination light emitted from a light source (illumination load 21) to superimpose the identification information (ID address) of the illumination apparatus 2 onto the illumination light. Further, when the image capture unit 38 receives the illumination light with the superimposed identification information, the controller 3 reads the identification information of the illumination apparatus 2 superimposed on the illumination light. That is, in the present modification, the illumination apparatus 2 can transmit the identification information of the illumination apparatus 2 to the controller 3 by visible light communication.

Specifically, first, when the user starts to turn on the registration screen of the illumination apparatuses 2 by using the controller 3, the wireless communication unit 31 of the controller 3 transmits an address request signal to the dimming device 4. Upon receiving the address request signal, the dimming device 4 outputs a dimming signal to each of the illumination apparatuses 2 for a certain period of time such that the each illumination apparatus 2 superimposes its own ID address on the illumination light.

When the user captures an image of an illumination apparatus 2 to be registered as a target (currently turned-on illumination apparatus 2) by using the image capture unit 38 of the controller 3, an ID address of the illumination apparatus 2 is read by the controller 3 while a still image of the illumination apparatus 2 is captured. In this way, even when the user does not know the ID addresses of the illumination apparatuses 2 to be registered, the ID addresses of the illumination apparatuses 2 are automatically inputted to the controller 3 while the still images of the illumination apparatuses 2 are captured. As a result, it is possible to facilitate a registration operation of the illumination apparatus 2.

With this modification, since the ID address is automatically inputted when the image of the illumination apparatus 2 is captured, a plurality of still images captured under lighting states having different dimming levels and/or color temperatures can be readily registered with respect to the illumination apparatus 2 to which one ID address is assigned. Thus, for example, it is possible to create profile data by using the plurality of still images, and simulate the reproduction of scenes of the illumination apparatus 2 on the display 35 on the basis of the profile data. Further, by associating the reproduction of scenes with the time data counted by the timer 32, it is possible to perform scheduling of the scene reproduction by using the controller 3.

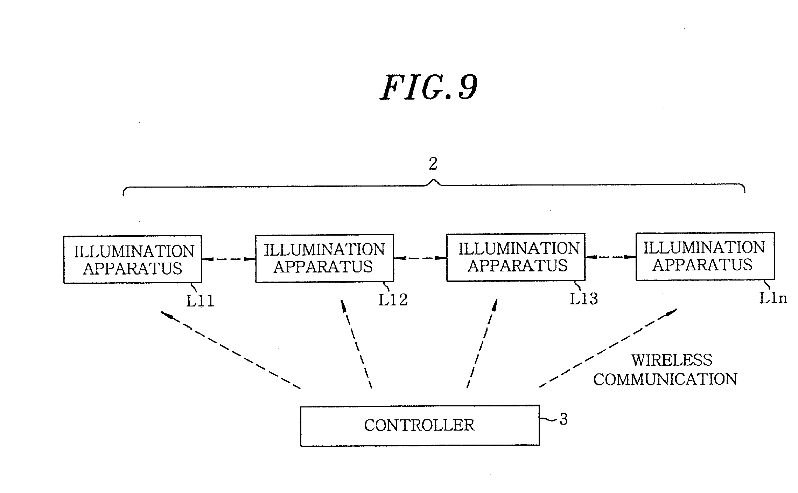

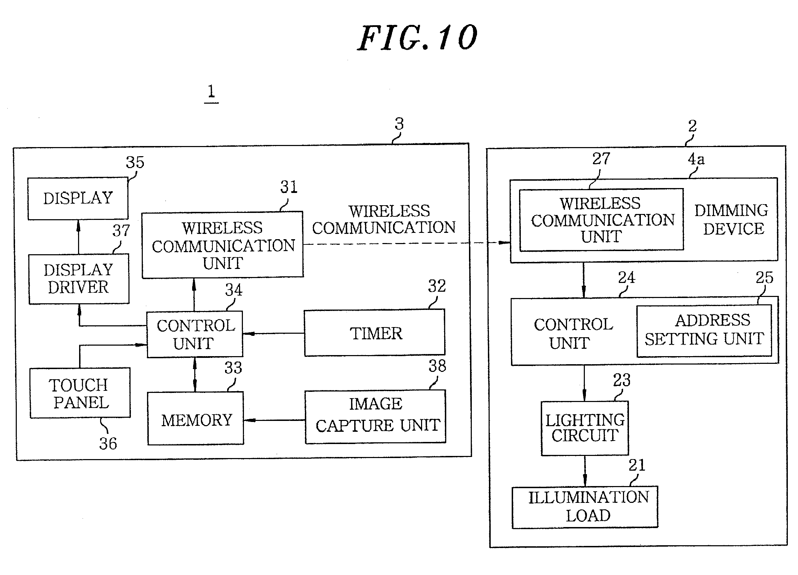

Next, an illumination control system 1 in accordance with another modification of the above embodiment will be described with reference to FIGS. 9 and 10. In the illumination control system 1 in accordance with the present modification, a dimming device 4a is built in the illumination apparatus 2, and the dimming device 4a includes a wireless communication unit 27 which receives the control signal outputted from the wireless communication unit 31 of the controller 3.

In this modification, the system 1 includes only the illumination apparatuses 2 and the controller 3, and does not include separately the dimming device 4 unlike the above embodiment. Therefore, when the conventional illumination apparatuses have been installed previously and when a small number of illumination apparatuses are additionally installed, the illumination control system of this modification can be readily introduced because the above-described function can easily be added to only the additional illumination apparatuses. Further, by sending and receiving communication signals between the wireless communication units 27 of the illumination apparatuses 2, it is possible to turn on the illumination apparatuses 2 in conjunction with each other without additionally providing wiring or the like.

The present invention is not limited to the configuration of the above embodiment, and can be modified in various ways. For example, in the above embodiment, there has been described a case where the image capture unit 38 captures the still images of the illumination apparatuses 2, but it is also possible to use an illustration or a 3D-CAD image of the illumination apparatus 2 which is obtained through various information transport terminals using a flash memory or the like.

Further, the controller 3 may receive data such as power consumption levels, variable color temperature ranges and variable dimming ranges of the illumination apparatuses 2 from the dimming device 4 or the illumination apparatuses 2, and may display the data on the setting input screen shown in FIGS. 6A and 6B. Furthermore, as the profile data of an illumination apparatus 2, a dimming range, a color temperature range, a power consumption level and the like may be registered to thereby allow the user to check the past usage or refer to them during scheduling of the scene reproduction.

While the invention has been shown and described with respect to the embodiments, it will be understood by those skilled in the art that various changes and modification may be made without departing from the scope of the invention as defined in the following claims.

## Claims

1. An illumination control system comprising:
an illumination apparatus to which identification information is assigned; and
a controller configured to set a lighting condition including a color temperature and a dimming level of light outputted from the illumination apparatus,
wherein the controller includes:
a wireless communication unit configured to output a control signal including the lighting condition;
a memory configured to store the identification information of the illumination apparatus in association with an image of the illumination apparatus;
a display configured to display the image of the illumination apparatus;
a touch panel disposed on the display and configured to sense a position on the touch panel touched by a user; and
an image capture unit configured to capture the image of the illumination apparatus, and
wherein when the image of the illumination apparatus is displayed on the display and the touch panel is touched to produce a touch pattern, the lighting condition is set based on the touch pattern and the wireless communication unit outputs the control signal including the lighting condition.

2. The illumination control system of claim 1, wherein the controller sets the dimming level to increase or decrease when one point touched on the touch panel draws a circle, and sets the color temperature to increase or decrease when two points touched on the touch panel move toward each other or away from each other.

3. The illumination control system of claim 1 or 2, further comprising a dimming device configured to output a dimming signal for controlling the illumination apparatus,
wherein the dimming device receives wirelessly the control signal outputted from the wireless communication unit of the controller and outputs the dimming signal in accordance with the received control signal.

4. The illumination control system of claim 1 or 2, wherein the illumination apparatus includes a modulation unit which modulates light from a light source to superimpose the identification information on illumination light, and
wherein when the image capture unit receives the illumination light, the controller reads the identification information superimposed on the illumination light.

5. The illumination control system of claim 3, wherein the dimming device is included in the illumination apparatus.

6. The illumination control system of claim 5, wherein the illumination apparatus includes an address setting unit for setting an identification address as the identification information.

7. The illumination control system of claim 1 or 2, wherein the identification information is stored in the memory by using the touch panel.
